# EUROPEAN PATENT APPLICATION

(11) **EP 3 974 779 A1**
(43) Date of publication of application: **30.03.2022**
(21) Application number: 19938228.4
(22) Date of filing: 19.07.2019
(51) Int. Cl.: G01C 25/00, B25J 9/16, G06T 7/80

(54) **ROBOT HAND-EYE CALIBRATION METHOD AND APPARATUS, COMPUTING DEVICE, MEDIUM AND PRODUCT**

(71) Applicant: Siemens Ltd., China, Chaoyang District Beijing 100102 (CN)
(72) Inventor: HE, Yinzeng, SuZhou, Jiangsu 215321 (CN); CHEN, Qixiao, Beijing 110105 (CN)
(74) Representative: Isarpatent
(86) International application number: PCT/CN2019/096908
(87) International publication number: WO 2021/012124

(57) **Abstract**

A robot hand-eye calibration method and apparatus, a computing device, a storage medium and a computer program product. The robot hand-eye calibration method comprises: a coordinate recording step: controlling the tail end of a robot arm (102) to sequentially move to at least three predetermined positions above a calibration plate (108); at each predetermined position: controlling a laser (104) provided on the robot arm (102) to project on the calibration plate, recording coordinates, in a robot coordinate system, of an end point of the tail end of the robot arm (102) during projection, and controlling a camera (106) on the tail end of the robot arm (102) to photograph the projection on the calibration plate (108), and recording the coordinates of the projection in the camera coordinate system; and a transformation matrix calculation step: calculating a calibration transformation matrix according to the recorded coordinates of at least three projections on the calibration plate (108) in the camera coordinate system and the coordinates of the end point of the tail end of the robot arm (102) in the robot coordinate system during each projection.

## Description

### Technical Field

The present disclosure generally relates to the field of robots, and in particular, to a robot hand-eye calibration method and apparatus, a computing device, a medium and a product.

### Background Art

In the field of industrial applications, a robot needs to perform tasks such as machining and installation by a hand-eye system. A hand-eye system is a vision system composed of a camera and a robot arm, wherein the camera is equivalent to a human eye, and the tail end of a robot arm is equivalent to a human hand.

Visual positioning guides a robot arm to perform a task, wherein, first, the camera coordinates and the robot coordinates are calibrated, so that the visually positioned camera coordinates are converted into robot coordinates to complete visual guidance, hand-eye calibration being the key to visual guidance of the robot arm.

At present, this hand-eye calibration process is usually done manually, in which the robot needs to be taught by a camera. Specifically, a calibration needle is installed at the tail end of a robot arm, and the robot arm is manually operated to move to nine points of the calibration plate. Since target positions in a camera coordinate system and those in a robot coordinate system need to be collected to calculate calibration data, this requires developers to do hard work; in addition, the accuracy of a calibration needle will affect calibration accuracy, manually operating a robot arm to move to nine points requires a relatively high degree of accuracy, the calibration accuracy is considerably affected by human factors, and the calibration takes relatively long, and therefore, a traditional hand-eye calibration method has the problems that the calibration process is complicated, that the calibration efficiency is low, and that the calibration accuracy is considerably affected by human factors.

Moreover, if the center point of a calibration tool is not completely perpendicular to the calibration plate, then the calibration accuracy will also be affected.

Therefore, there is a need for an automatic hand-eye calibration method that achieves a high degree of measurement accuracy.

### Summary of the Invention

A brief overview of the present invention will be given below in order to provide a basic understanding of certain aspects of the present invention. It should be understood that this overview is not an exhaustive overview of the present invention. It is not intended to ascertain any key or important parts of the present invention, nor is it intended to limit the scope of the present invention. It is intended merely to present some concepts in a simplified form as an introduction to the more detailed description that will be given later.

In view of what has been mentioned above, the present disclosure provides an automatic hand-eye calibration method that achieves a high degree of measurement accuracy. In a technical solution of the present disclosure, a laser is provided on a robot arm, and the laser may be used to achieve automatic hand-eye calibration.

According to one aspect of the present disclosure, a robot hand-eye calibration method is provided, comprising: a coordinate recording step: controlling the tail end of a robot arm to sequentially move to at least three predetermined positions above a calibration plate; at each predetermined position: controlling a laser provided on the robot arm to project on the calibration plate, recording coordinates, in a robot coordinate system, of an end point of the tail end of the robot arm during projection, and controlling a camera on the tail end of the robot arm to photograph the projection on the calibration plate, and recording the coordinates of the projection in the camera coordinate system; and a transformation matrix calculation step: calculating a calibration transformation matrix according to the recorded coordinates of at least three projections on the calibration plate in the camera coordinate system and the coordinates of the end point of the tail end of the robot arm in the robot coordinate system during each projection.

Thus, the hand-eye calibration process may be automatically completed, without manual operation, by controlling, with a program, a laser to project at least three times on the calibration plate, and then calculating a calibration transformation matrix according to the respective recorded coordinates of the three projections in the camera coordinate system and the coordinates of the end point of the tail end of the robot arm in the robot coordinate system during each projection.

Optionally, in an example of the above-mentioned aspect, the laser comprises a laser ranging component and a laser projection component, wherein the laser projection component is used for projecting on the calibration plate.

Optionally, in an example of the above-mentioned aspect, an advancement direction of a laser beam emitted by the laser ranging component is parallel to the optical axis of the camera, and an advancement direction of a laser beam emitted by the laser projection component is parallel to the optical axis of the camera.

Optionally, in an example of the above-mentioned aspect, before performing the robot coordinate recording step, the method further comprises: a parallel correction step: controlling the laser ranging component of the laser to perform correction so that the imaging plane of a camera on the tail end of the robot arm is parallel to the plane of the calibration plate.

Optionally, in an example of the above-mentioned aspect, the parallel correction step comprises: controlling the tail end of the robot arm to move to three non-collinear points following a plane parallel to the imaging plane of the camera above the calibration plate; calculating the motion plane of the tail end of the robot arm on the basis of the three points; calculating, with the laser ranging component, the angle between the motion plane and the calibration plate, so as to obtain the angle between the imaging plane and the calibration plate; and adjusting the posture of the tail end of the robot arm according to the calculated angle, so that the imaging plane of the camera provided at the tail end of the robot arm is parallel to the calibration plate.

Thus, the imaging plane of the camera is made parallel to the plane of the calibration plate to reduce calibration errors caused when the imaging plane of the camera is not parallel to the plane of the calibration plate, thereby improving the accuracy of hand-eye calibration.

Optionally, in an example of the above-mentioned aspect, before performing the robot coordinate recording step, the method further comprises: a range adjusting step: measuring, with the laser ranging component, a distance between the camera and the calibration plate, and adjusting a distance between the camera and the calibration plate to maintain a predetermined distance, wherein the predetermined distance is preset according to the focal length of the camera, so that a projection on the calibration plate is clearly imaged on the imaging plane of the camera.

Thus, a suitable distance may be kept between the camera and the calibration plate photographs are taken, so as to ensure the definition of an image produced by the camera, thereby further improving the calibration accuracy.

According to another aspect of the present disclosure, a robot hand-eye calibration apparatus is provided, comprising: a coordinate recording unit configured to control the tail end of the robot arm to sequentially move to at least three predetermined positions above a calibration plate, at each predetermined position, controlling a laser provided on the robot arm to project on the calibration plate, recording coordinates, in a robot coordinate system, of an end point of the tail end of the robot arm during projection, and controlling a camera on the tail end of the robot arm to photograph the projection on the calibration plate, and recording the coordinates of the projection in the camera coordinate system; and a transformation matrix calculation unit configured to calculate a calibration transformation matrix according to the recorded coordinates of at least three projections on the calibration plate in the camera coordinate system and the coordinates of the end point of the tail end of the robot arm in the robot coordinate system during each projection.

Optionally, in an example of the above-mentioned aspect, the laser comprises a laser ranging component and a laser projection component, wherein the laser projection component is used for projecting on the calibration plate.

Optionally, in an example of the above-mentioned aspect, an advancement direction of a laser beam emitted by the laser ranging component is parallel to the optical axis of the camera, and an advancement direction of a laser beam emitted by the laser projection component is parallel to the optical axis of the camera.

Optionally, in an example of the above-mentioned aspect, the robot hand-eye calibration apparatus further comprises: a parallel correction unit configured to control the laser ranging component of the laser to perform correction so that the imaging plane of the camera on the tail end of the robot arm is parallel to the plane of the calibration plate.

Optionally, in an example of the above-mentioned aspect, the parallel correction unit is further configured to: control the tail end of the robot arm to move to three non-collinear points following a plane parallel to the imaging plane of the camera above the calibration plate; calculate the motion plane of the tail end of the robot arm on the basis of the three points; calculate, with the laser ranging component, the angle between the motion plane and the calibration plate, so as to obtain the angle between the imaging plane and the calibration plate; and adjust the posture of the tail end of the robot arm according to the calculated angle, so that the imaging plane of the camera provided at the tail end of the robot arm is parallel to the calibration plate.

Optionally, in an example of the above-mentioned aspect, the robot hand-eye calibration apparatus further comprises: a range adjusting unit configured to control the laser ranging component to measure a distance between the camera and the calibration plate, and adjust a distance between the camera and the calibration plate to maintain a predetermined distance, wherein the predetermined distance is preset according to the focal length of the camera, so that a projection on the calibration plate is clearly imaged on the imaging plane of the camera.

According to another aspect of the present disclosure, a robot arm is provided, comprising: a laser; and a camera, wherein the laser comprises a laser ranging component and a laser projection component, the laser projection component being used for projecting on a calibration plate, the laser ranging component being used for performing correction so that the imaging plane of the camera is parallel to the plane of the calibration plate.

According to another aspect of the present disclosure, a computing device is provided, comprising: at least one processor; and a memory coupled to the at least one processor, the memory storing an instruction that, when executed by the at least one processor, causes the processor to execute the above-described method.

According to another aspect of the present disclosure, a non-volatile machine-readable storage medium is provided, which stores an executable instruction, and the instruction, when executed, causes the machine to implement the above-described method.

According to another aspect of the present disclosure, a computer program product is provided that is tangibly stored on a computer-readable medium and comprises a computer-executable instruction, wherein the computer-executable instruction, when executed, causes any least one processor to implement the above-described method.

### Brief Description of the Drawings

The above-described and other objectives, features and advantages of the present invention will be more easily understood with reference to the following description of embodiments of the present invention in conjunction with the drawings. The components shown in the drawings are intended only to illustrate the principle of the present invention. In the drawings, the same or similar technical features or components will be denoted by the same or similar reference signs. The following drawings are intended to schematically describe and explain the present invention, instead of limiting the scope thereof.
Fig. 1 is a schematic diagram of a robot arm according to an embodiment of the present disclosure;
Fig. 2 is a flowchart of an exemplary process of a robot hand-eye calibration method according to an embodiment of the present disclosure;
Fig. 3 is a flowchart showing an exemplary process of the operations in block S206 in Fig. 2;
Fig. 4 is a block diagram of an exemplary configuration of a robot hand-eye calibration apparatus according to an embodiment of the present disclosure; and
Fig. 5 is a block diagram of a computing device for hand-eye calibration of a robot according to an embodiment of the present disclosure.

The reference signs are briefly described as follows.
- 102:: Robot
- 104:: Laser
- 106:: Camera
- 108:: Calibration plate
- 200:: Robot hand-eye calibration method
- S202, S204, S206, S208, S302, S304, S306, S308:: Step
- 400:: Robot hand-eye calibration apparatus
- 402:: Coordinate recording unit
- 404:: Transformation matrix calculation unit
- 406:: Parallel correction unit
- 408:: Range adjusting unit
- 500:: Computing device
- 502:: Processor
- 504:: Memory

### Specific Embodiments

The subject matter described herein will now be discussed below with reference to exemplary embodiments. It should be understood that the discussion of these embodiments is only intended to allow those of ordinary skill in the art to better understand and implement the subject matter described herein, instead of limiting the scope of protection as defined by the claims, applicability, or examples. The functions and arrangements of the discussed elements may be changed without departing from the scope of protection of the present disclosure. In each example, various processes or components may be omitted, replaced, or added as needed. For example, a described method may be implemented in a sequence different from the described one, and various steps may be added, omitted, or combined. In addition, characteristics described with respect to some examples may also be combined in other examples.

As used herein, the term "comprising" and variants thereof mean open terms, meaning "including but not limited to". The term "on the basis of" means "based at least in part on." The terms "an embodiment" and "one embodiment" mean "at least one embodiment." The term "another embodiment" means "at least one other embodiment." The terms "first", "second", etc. may refer to different or the same objects. Other definitions may be included below, explicitly or implicitly. Unless clearly otherwise specified in the context, the definition of a term remains consistent throughout the description.

The present disclosure provides an automatic hand-eye calibration method that achieves a high degree of measurement accuracy. In a technical solution of the present disclosure, a laser is provided on a robot arm, and the laser may be used to achieve automatic hand-eye calibration.

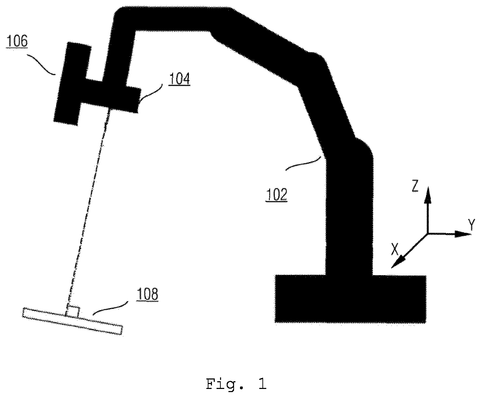

Fig. 1 is a schematic diagram of a robot according to an embodiment of the present disclosure. In Fig. 1, 102 indicates a robot arm, 104 indicates a laser provided at the tail end of the robot arm, 106 indicates a camera provided at the tail end of the robot arm, and 108 indicates a calibration plate.

The laser 104 comprises a laser ranging component and a laser projection component, the laser projection component being used for projecting on the calibration plate 108, the laser ranging component being used for performing correction so that the imaging plane of the camera 106 is parallel to the plane of the calibration plate 108.

The laser 104 may be implemented by integrating two laser components, namely, a laser ranging component and a laser projection component, or may be implemented by one laser that has both a ranging function and a projection function.

It is understandable that Fig. 1 is a schematic diagram of a robot arm provided with a laser, wherein the relationship between the components is only illustrative, and that those of ordinary skill in the art can set a positional relationship between the components as needed, instead of being limited to what is shown in Fig. 1.

A robot hand-eye calibration method and apparatus according to embodiments of the present disclosure will be described below with reference to the drawings.

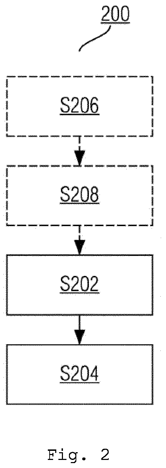

Fig. 2 is a flowchart of an exemplary process of a robot hand-eye calibration method 200 according to an embodiment of the present disclosure.

First, in block S202, the coordinate recording step is performed to control the tail end of the robot arm to sequentially move to at least three predetermined positions above a calibration plate, wherein, at each predetermined position, a laser provided on the robot arm is controlled to project on the calibration plate, coordinates, in a robot coordinate system, of an end point of the tail end of the robot arm during projection are recorded, and a camera on the tail end of the robot arm is controlled to photograph the projection on the calibration plate, and the coordinates of the projection in the camera coordinate system are recorded.

In an embodiment according to the present disclosure, the laser comprises a laser ranging component and a laser projection component, wherein the laser projection component is used for projecting on the calibration plate.

An advancement direction of a laser beam emitted by the laser ranging component is parallel to the optical axis of the camera, and an advancement direction of a laser beam emitted by the laser projection component is parallel to the optical axis of the camera.

The recorded coordinates of a projection in the camera coordinate system are the coordinates of the geometric center of the projection.

By performing this step, at least three sets of coordinates of at least three projections on the calibration plate in the camera coordinate system and of an end point of the tail end of the robot arm in the robot coordinate system during each projection may be recorded.

The tail end of the robot arm may be controlled by a program to sequentially move to at least three predetermined positions, wherein the three predetermined positions are set to be non-collinear and the plane formed by the three predetermined positions is parallel to the imaging plane of the camera.

In addition, it is also possible to consider setting a predetermined position within a rational range of movement of the robot, instead of setting a position that the robot cannot reach or has difficulty in reaching; the distance spanned by the three points should be set considering the size of the calibration plate, which means that it should not be so large that it exceeds the calibration plate, nor should it be so small that the calibration accuracy is affected. Preferably, the distance spanned by the three points may be set to approximately two-thirds of the length and width of the calibration plate.

Then, in block S204, a transformation matrix calculation step is performed to calculate a calibration transformation matrix according to the recorded coordinates of at least three projections on the calibration plate in the camera coordinate system and the coordinates of the end point of the tail end of the robot arm in the robot coordinate system during each projection.

Those of ordinary skill in the art can understand the specific process of calculating a transformation matrix on the basis of these three sets of coordinates, and no similar descriptions will be given again herein.

In the method according to the present embodiment, the hand-eye calibration process may be automatically completed, without manual operation, by controlling, with a program, a laser to project at least three times on the calibration plate, and then calculating a calibration transformation matrix according to the respective recorded coordinates of the three projections in the camera coordinate system and the coordinates of the end point of the tail end of the robot arm in the robot coordinate system during each projection.

In one example, before the hand-eye calibration process, a method according to the present disclosure may further comprise a parallel correction step in block S206: controlling the laser ranging component of the laser to perform correction so that the imaging plane of a camera on the tail end of the robot arm is parallel to the plane of the calibration plate.

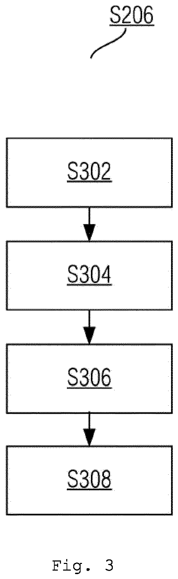

Specifically, as shown in Fig. 3, the operations in block S206 may be performed by the following process.

First, in block S302, the tail end of the robot arm is controlled to move to three non-collinear points following a plane parallel to the imaging plane of the camera above the calibration plate.

Next, in block S304, the motion plane of the tail end of the robot arm is calculated on the basis of the three points.

In block S306, the laser ranging component is used to calculate the angle between the motion plane and the calibration plate, so as to obtain the angle between the imaging plane and the calibration plate.

Finally, in block S308, the posture of the tail end of the robot arm is adjusted according to the calculated angle, so that the imaging plane of the camera provided at the tail end of the robot arm is parallel to the calibration plate.

In other words, before robot hand-eye calibration is performed, the posture of the tail end of the robot arm is determined by the parallel correction step so that the imaging plane of the camera on the tail end of the robot arm is parallel to the plane of the calibration plate. After that, the robot arm, when moved for hand-eye calibration, will keep taking the posture, while moving only in directions x, y, and z .

Making the imaging plane of the camera parallel to the calibration plate by the method shown in Fig. 3 can reduce calibration errors caused when the imaging plane of the camera is not parallel to the calibration plate, thereby improving the accuracy of hand-eye calibration.

In an example, a method according to the present disclosure may further comprise a range adjusting step in block S208: measuring, with the laser ranging component, a distance between the camera and the calibration plate, and adjusting a distance between the camera and the calibration plate to maintain a predetermined distance, wherein the predetermined distance is preset according to the focal length of the camera, so that a projection on the calibration plate is clearly imaged on the imaging plane of the camera.

An industrial lens usually used by a robot does not autofocus and requires manual focusing. This means that an object may be photographed most clearly at a certain distance. An object cannot be photographed clearly if it is too close to or too far from the lens. On the other hand, CCD/CMOS image sizes of an object vary at different distances (which is indicated by a difference between the physical distances corresponding to two pixels), and calibration is meaningful only at a fixed distance. Therefore, the operation in the above-mentioned block S210 may be performed to keep a predetermined distance between the camera and the calibration plate, so that the definition of an image produced by the camera may be ensured, and the calibration accuracy may be further improved.

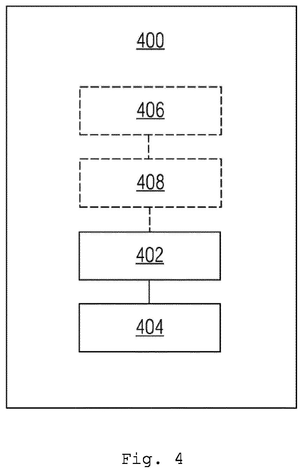

Fig. 4 is a block diagram of an exemplary configuration of a robot hand-eye calibration apparatus 400 according to an embodiment of the present disclosure.

As shown in Fig. 4, the robot hand-eye calibration apparatus 400 comprises: a coordinate recording unit 402 and a transformation matrix calculation unit 404.

The robot coordinate recording unit 402 controls the tail end of the robot arm to sequentially move to at least three predetermined positions above a calibration plate, at each predetermined position, controlling a laser provided on the robot arm to project on the calibration plate, recording coordinates, in a robot coordinate system, of an end point of the tail end of the robot arm during projection, and controlling a camera on the tail end of the robot arm to photograph the projection on the calibration plate, and recording the coordinates of the projection in the camera coordinate system.

The transformation matrix calculation unit 404 calculates a calibration transformation matrix according to the recorded coordinates of at least three projections on the calibration plate in the camera coordinate system and the coordinates of the end point of the tail end of the robot arm in the robot coordinate system during each projection.

In an embodiment according to the present disclosure, the laser comprises a laser ranging component and a laser projection component, wherein the laser projection component is used for projecting on the calibration plate.

An advancement direction of a laser beam emitted by the laser ranging component is parallel to the optical axis of the camera, and an advancement direction of a laser beam emitted by the laser projection component is parallel to the optical axis of the camera.

In an example, the robot hand-eye calibration apparatus 400 may further comprise a parallel correction unit 406, and the parallel correction unit 406 controls the laser ranging component of the laser to perform correction so that the imaging plane of the camera on the tail end of the robot arm is parallel to the plane of the calibration plate.

Specifically, the parallel correction unit 406 may be configured to: control the tail end of the robot arm to move to three non-collinear points following a plane parallel to the imaging plane of the camera above the calibration plate; calculate the motion plane of the tail end of the robot arm on the basis of the three points; calculate, with the laser ranging component, the angle between the motion plane and the calibration plate, so as to obtain the angle between the imaging plane and the calibration plate; and adjust the posture of the tail end of the robot arm according to the calculated angle, so that the imaging plane of the camera provided at the tail end of the robot arm is parallel to the calibration plate.

In another example, the robot hand-eye calibration apparatus 400 may further comprise a range adjusting unit 408, and the range adjusting unit 408 controls the laser ranging component to measure a distance between the camera and the calibration plate, and adjusts a distance between the camera and the calibration plate to maintain a predetermined distance, wherein the predetermined distance is preset according to the focal length of the camera, so that a projection on the calibration plate is clearly imaged on the imaging plane of the camera.

Details of the operations and functions of each part of the robot hand-eye calibration apparatus 400, for example, may be the same as or similar to relevant parts of the embodiments of a robot hand-eye calibration method of the present disclosure as described with reference to Fig. 1 - 3, and no similar descriptions will be given again herein.

It should be noted that the structure of the robot hand-eye calibration apparatus 400 and of its constituent units shown in Fig. 4 is only exemplary, and those of ordinary skill in the art can modify the structural block diagram shown in Fig. 4 as needed.

A robot hand-eye calibration method and apparatus according to embodiments of the present disclosure have been described above with reference to Fig. 1 to Fig. 4. The above-described robot hand-eye calibration apparatus may be implemented by hardware, by software, or by a combination of hardware and software.

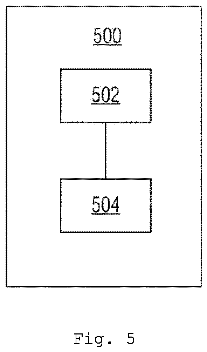

In the present disclosure, the robot hand-eye calibration apparatus 400 may be implemented using a computing device. Fig. 5 is a block diagram of a computing device 500 for performing hand-eye calibration of a robot according to an embodiment of the present disclosure. According to an embodiment, the computing device 500 may comprise at least one processor 502, and the processor 502 executes at least one computer-readable instruction (namely, an element implemented in the form of software as mentioned above) stored or encoded in a computer-readable storage medium (namely, the memory 504) .

In one embodiment, a computer-executable instruction is stored in the memory 504, which, when executed, causes at least one processor 502 to complete the following actions: controlling the tail end of a robot arm to sequentially move to at least three predetermined positions above a calibration plate; at each predetermined position: controlling a laser provided on the robot arm to project on the calibration plate, recording coordinates, in a robot coordinate system, of an end point of the tail end of the robot arm during projection, and controlling a camera on the tail end of the robot arm to photograph the projection on the calibration plate, and recording the coordinates of the projection in the camera coordinate system; and calculating a calibration transformation matrix according to the recorded coordinates of at least three projections on the calibration plate in the camera coordinate system and the coordinates of the end point of the tail end of the robot arm in the robot coordinate system during each projection.

It should be understood that a computer-executable instruction stored in the memory 504, when executed, causes the at least one processor 502 to perform various operations and functions described above with reference to Fig. 1 - 4 in the various embodiments of the present disclosure.

According to one embodiment, a nonvolatile machine-readable medium is provided. The nonvolatile machine-readable medium may have a machine-executable instruction (namely, an element implemented in the form of software as mentioned above) that, when executed by a machine, causes the machine to perform the various operations and functions described above with reference to Fig. 1 - 4 in the various embodiments of the present disclosure.

According to one embodiment, a computer program product is provided, comprising a computer-executable instruction that, when executed, causes at least one processor to perform the various operations and functions described above with reference to Fig. 1 - 4 in the various embodiments of the present disclosure.

While exemplary embodiments have been described above in conjunction with specific embodiments illustrated by the drawings, the embodiments are not all embodiments that may be implemented or fall within the protection scope defined by the claims. The term "exemplary" used throughout this description means "serving as an example, instance, or illustration", instead of implying being "preferred" or "advantageous" over other embodiments. Specific embodiments include specific details for the purpose of providing an understanding of the described techniques. However, these techniques may be implemented without these specific details. In some examples, in order to avoid causing any difficulties in understanding the concepts of the described embodiments, well-known structures and devices are shown in the form of block diagrams.

The preceding description of the present disclosure is provided to allow those of ordinary skill in the art to implement or use the present disclosure. It is readily apparent to those of ordinary skill in the art that various modifications may be made to the present disclosure, and that the general principles defined herein may also be applied to other variants without departing from the scope of protection of the present disclosure. Therefore, the present disclosure, instead of being limited to the examples and designs described herein, is consistent with the widest scope that conforms to the principles and novel characteristics disclosed herein.

## Claims

1. A robot hand-eye calibration method, comprising:
a coordinate recording step: controlling the tail end of a robot arm to sequentially move to at least three predetermined positions above a calibration plate; at each predetermined position: controlling a laser provided on the robot arm to project on the calibration plate, recording coordinates, in a robot coordinate system, of an end point of the tail end of the robot arm during projection, and controlling a camera on the tail end of the robot arm to photograph the projection on the calibration plate, and recording the coordinates of the projection in the camera coordinate system; and
a transformation matrix calculation step: calculating a calibration transformation matrix according to the recorded coordinates of at least three projections on the calibration plate in the camera coordinate system and the coordinates of the end point of the tail end of the robot arm in the robot coordinate system during each projection.

2. The method as claimed in claim 1, **characterized in that** the laser comprises a laser ranging component and a laser projection component, wherein the laser projection component is used for projecting on a calibration plate.

3. The method as claimed in claim 2, **characterized in that** an advancement direction of a laser beam emitted by the laser ranging component is parallel to the optical axis of the camera, and **in that** an advancement direction of a laser beam emitted by the laser projection component is parallel to the optical axis of the camera.

4. The method as claimed in any of claims 1 - 3, **characterized in that** before performing the coordinate recording step, the method further comprises:
a parallel correction step: controlling the laser ranging component of the laser to perform correction so that the imaging plane of a camera on the tail end of the robot arm is parallel to the plane of the calibration plate.

5. The method as claimed in claim 4, **characterized in that** the parallel correction step comprises:
controlling the tail end of the robot arm to move to three non-collinear points following a plane parallel to the imaging plane of the camera above the calibration plate;
controlling the tail end of the robot arm to move to three non-collinear points following a plane parallel to the imaging plane of the camera above the calibration plate; calculating the motion plane of the tail end of the robot arm on the basis of the three points;
calculating, with the laser ranging component, the angle between the motion plane and the calibration plate, so as to obtain the angle between the imaging plane and the calibration plate; and
adjusting the posture of the tail end of the robot arm according to the calculated angle, so that the imaging plane of the camera provided at the tail end of the robot arm is parallel to the calibration plate.

6. The method as claimed in any of claims 1 - 3, **characterized in that** before performing the robot coordinate recording step, the method further comprises: a range adjusting step: measuring, with the laser ranging component, a distance between the camera and the calibration plate, and adjusting a distance between the camera and the calibration plate to maintain a predetermined distance, wherein the predetermined distance is preset according to the focal length of the camera, so that a projection on the calibration plate is clearly imaged on the imaging plane of the camera.

7. A robot hand-eye calibration apparatus (400), comprising:
a coordinate recording unit (402), the coordinate recording unit (402) being configured to control the tail end of the robot arm to sequentially move to at least three predetermined positions above a calibration plate, at each predetermined position: controlling a laser provided on the robot arm to project on the calibration plate, recording coordinates, in a robot coordinate system, of an end point of the tail end of the robot arm during projection, and controlling a camera on the tail end of the robot arm to photograph the projection on the calibration plate, and recording the coordinates of the projection in the camera coordinate system; and
a transformation matrix calculation unit (404), the transformation matrix calculation unit (404) being configured to calculate a calibration transformation matrix according to the recorded coordinates of at least three projections on the calibration plate in the camera coordinate system and the coordinates of the end point of the tail end of the robot arm in the robot coordinate system during each projection.

8. The apparatus (400) as claimed in claim 7, **characterized in that** the laser comprises a laser ranging component and a laser projection component, wherein the laser projection component is used for projecting on a calibration plate.

9. The apparatus (400) as claimed in claim 8, **characterized in that** an advancement direction of a laser beam emitted by the laser ranging component is parallel to the optical axis of the camera, and **in that** an advancement direction of a laser beam emitted by the laser projection component is parallel to the optical axis of the camera.

10. The apparatus (400) as claimed in any of claims 7 - 9, further comprising:
a parallel correction unit (406), the parallel correction unit (406) being configured to control the laser ranging component of the laser to perform correction so that the imaging plane of the camera on the tail end of the robot arm is parallel to the plane of the calibration plate.

11. The apparatus (400) as claimed in claim 10, **characterized in that** the parallel correction unit (406) is further configured to:
control the tail end of the robot arm to move to three non-collinear points following a plane parallel to the imaging plane of the camera above the calibration plate;
calculate the motion plane of the tail end of the robot arm on the basis of the three points;
calculate, with the laser ranging component, the angle between the motion plane and the calibration plate, so as to obtain the angle between the imaging plane and the calibration plate; and
adjusting the posture of the tail end of the robot arm according to the calculated angle, so that the imaging plane of the camera provided at the tail end of the robot arm is parallel to the calibration plate.

12. The apparatus (400) as claimed in any of claims 7 - 9, further comprising:
a range adjusting unit (408), the range adjusting unit (408) being configured to control the laser ranging component to measure a distance between the camera and the calibration plate, and adjust a distance between the camera and the calibration plate to maintain a predetermined distance, wherein the predetermined distance is preset according to the focal length of the camera, so that a projection on the calibration plate is clearly imaged on the imaging plane of the camera.

13. A robot arm (102), comprising:
a laser (104); and
a camera (106);
wherein the laser (104) comprises a laser ranging component and a laser projection component, the laser projection component being used for projecting on a calibration plate (108), the laser ranging component being used for performing correction so that the imaging plane of the camera (106) is parallel to the plane of the calibration plate (108).

14. A computing device (500), comprising:
at least one processor (502); and
a memory (504) coupled to the at least one processor (502), the memory storing an instruction that, when executed by the at least one processor (502), causes the processor (502) to execute the method as claimed in any of claims 1 to 6.

15. A nonvolatile machine-readable storage medium storing an executable instruction that, when executed, causes a machine to perform the method as claimed in any of claims 1 to 6.

16. A computer program product tangibly stored on a computer-readable medium and comprising a computer-executable instruction, wherein the computer-executable instruction, when executed, causes at least one processor to perform the method as claimed in any of claims 1 to 6.
